(19) Europäisches Patentamt / European Patent Office / Office européen des brevets

(11) **EP 4 089 213 B1**

(12) **EUROPÄISCHE PATENTSCHRIFT**

(45) Veröffentlichungstag und Bekanntmachung des Hinweises auf die Patenterteilung:
**31.01.2024  Patentblatt 2024/05**

(21) Anmeldenummer: **21000137.6**

(22) Anmeldetag: **15.05.2021**

(51) Internationale Patentklassifikation (IPC):
***D01H 7/56*** *(2006.01)*

(52) Gemeinsame Patentklassifikation (CPC):
**D01H 7/56**

(54) **VORRICHTUNG UND VERFAHREN ZUM AUFSPULEN UND VERDRILLEN VON FASERMATERIAL IN RINGSPINN- ODER RINGZWIRNMASCHINEN**

DEVICE AND METHOD FOR WINDING AND TWISTING FIBRE MATERIAL IN RING SPINNING OR RING TWISTING MACHINES

DISPOSITIF ET PROCÉDÉ DE BOBINAGE ET DE TORSION DE LA MATIÈRE FIBREUSE DANS DES MÉTIERS À FILER CONTINU À ANNEAUX OU À RETORDRE CONTINU À ANNEAUX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.11.2022  Patentblatt 2022/46**

(73) Patentinhaber: **SANKO TEKSTIL ISLETMELERI SAN. TIC. A.S.**
**Sehitkamil, Gaziantep (TR)**

(72) Erfinder:
• **WERFEL, Frank**
**04227 Leipzig (DE)**

• **FLÖGEL-DELOR, Uta**
**04861 Torgau/OT Loßwig (DE)**

(74) Vertreter: **Beyer, Wolfgang**
**Dinter Kreißig & Partner**
**Gottschedstrasse 12**
**04109 Leipzig (DE)**

(56) Entgegenhaltungen:
**EP-A1- 3 231 904     EP-A1- 3 812 492**
**WO-A1-2017/178196     WO-A1-2019/037836**

**Beschreibung**

Die Erfindung betrifft eine Vorrichtung und ein mittels dieser Vorrichtung anwendbares Verfahren, die zum Aufspulen und Verdrillen von insbesondere Garnen in Ringspinn- und Ringzwirnmaschinen dienen. Die geschaffene Lösung nutzt Anordnungen von hochtemperatursupraleitenden Magnetlagern um bei hohen Geschwindigkeiten Verbrennungen des Garnes durch das Rotieren der koaxial zu den Spindeln angeordneten permanentmagnetischen Rotoren zu verhindern.

Die Ringspinntechnologie ist die älteste Art des Faserspinnens und wird noch immer eingesetzt. Aufgrund der hochwertigen Qualität des Garns und der Flexibilität ist das Ringspinnverfahren jedoch die dominierende Technik in der Gamherstellung.Weltweit ist das Ringspinnverfahren im Einsatz mit einer Reihe von Vorteilen, die kaum durch andere

Techniken ersetzt werden können. Grundlegende Vorteile sind:

(i) Herstellung von sowohl feinfädigen als auch hochfesten Garnen;

(ii) universelle Anwendung auf eine große Vielfalt sowie auf sehr spezielle Garne;

(iii) Ringspinnen ist flexibel in Bezug auf Mengen, Garnqualität und Gleichmäßigkeit;

Das Ringspinnen kann die größte Bandbreite an Garnstärken mit der höchsten Festigkeit und Qualität ausführen. Im Gegensatz dazu ist das Ringspinnen langsamer als andere moderne Spinnsysteme wie Rotor-, Friktions-, Düsen- oder Wirbelspinnen und erfordert mehr Verarbeitungsschritte. Die Fertigungsbegrenzung und Produktivität wird durch das konventionelle Ringrotorsystem bestimmt, das bei höheren Geschwindigkeiten eine mechanische Reibung in Verbindung mit einer Erwärmung des Rotors bzw. des Fadenführers verursacht. In der Folge wird das Garn verbrannt, glüht durch und reißt.

Kurz nach der Entdeckung der Hochtemperatur-Supraleiter (HTS) im Jahre 1986187 wurde die Kombination eines Permanentmagneten (PM) mit den neuen Supraleitern vorgeschlagen, die eine nahezu reibungsfreie Levitation und Rotation demonstriert. Später wurde die SMB-Technik für den Einsatz in Zentrifugen bereits 2001 in der Literatur beschrieben [4]. Es konnte gezeigt werden, dass der neue Magnetlagertyp extrem hohe Umdrehungen pro Minute (U/min) über $10^5$ ermöglicht. Die Vorteile und der Nutzen der HTS-Magnetlager sind für viele Anwendungen, insbesondere in High-Tech-Lösungen, nützlich.

Durch den nahezu reibungsfreien Betrieb sind hohe Drehzahlen ohne Schmierung, kein Abrieb und keine Partikelbildung auch unter schwierigen Umgebungsbedingungen wie Hitze, Kälte , Dampf, Vakuum und aggressiven Chemikalien möglich.

Gleichzeitig lernte man die Rotordynamik mit selbstregulierendem Unwuchtausgleich, die Überwindung kritischer Drehzahlen im Hochgeschwindigkeitsbetrieb und die Erhöhung von Rotordrehzahlen sowie gleichzeitig die Verschiebung von supraleitenden Magnetlager (SMB) in den Lastbereich von Tonnen, wie beim Einsatz in Schwungrad-Energiespeichern, zu verstehen.

Erste Experimente und Anwendungen der SMB in der Ringspinntechnik begannen im Jahr 2010 [3], [5]). Später untersuchte die Dresdner Gruppe von Hussain, de Haas und Schultz ([7] - [18]) ausführlich die signifikanten Vorteile des Ersatzes der konventionellen Ringspinnmethode durch den Einsatz eines rotierenden SMB. Dabei folgte das SMB-Design dem koaxialen PM-Ring-zu-HTS-Ring-Design, das in einen Edelstahl-Vakuumkryostaten integriert wurde. Die Experimente sind in der Literatur [8] - [18] detailliert beschrieben und analysiert. Nachteilig ist der große Aufwand an der Supraleiter-Ring- Geometrie.

Aus der WO 2012/100964 A1 und der WO 20171178196 A1 sind Aufwickel- und Ringzwirnvorrichtungen einer Ringspinn- oder Ringzwirnmaschine bekannt. Bei diesen Vorrichtungen wird die Reibung zwischen Ring und Rotor durch magnetisches Schweben aufgehoben, wodurch die wirkenden Reibungskräfte reduziert werden. Es wird ein ringförmiger Stator aus einem supraleitenden Material mit einer entsprechenden Stator-Kühlvorrichtung verwendet. Außer dem ringförmigen Stator kommt ein ringförmiger permanentmagnetischer Rotor zur Anwendung, der relativ zum Stator drehbar sowie koaxial um die Spindel mit einem ösenförmigen Fadenführungselement angeordnet ist. Dabei wird zwischen dem Stator und den Rotor ein ringförmiger axialer Spalt gebildet. Wenn das supraleitende Material des Stators unter die Sprungtemperatur abgekühlt wird, wird der magnetische Fluss des Rotors in den gekühlten Stator eingekoppelt und magnetisch gefangen. Durch diese Kopplung ist der Rotor über bzw. innerhalb des Stators eigenstabil. Der Faden wird durch den axialen Spalt zwischen Stator und Rotor von außen um den Rotor geführt und auf die Spule gewickelt. Der Stator und der Rotor besitzen besonders abgerundeten Formen, damit der Faden keine Kanten findet, die die Zirkulation des Fadens im Spalt behindern. Vor der Magnetisierung und Kühlung des HTS-Stators dient eine mechanische Abstützung der optimierten Arbeitsposition. Die berührungslose Lagerung des rotierenden Rotors eliminiert das klassische, Reibungswärme erzeugende RingRotor-System als produktivitätsbegrenzende Komponente. Vorteilhafterweise wird nun der gesamte Rotor mit dem Fadenführungselement in eine schnelle Rotation versetzt, die bis auf eine geringe magnetische Reibung im Wesentlichen reibungsfrei ist und damit deutlich höhere Spindeldrehzahlen erlaubt.

Der als Magnetring ausgeführte Rotor hat jedoch ein erhebliches Eigengewicht, das beim Anfahren der Spindel ebenfalls beschleunigt werden muss. Außerdem kann der frei schwebende Magnetring nicht gekapselt werden, so dass der mit hohen Drehzahlen von ca. 20.000 bis 30.000 Umdrehungen pro Minute (U/min) laufende Rotor ein Sicherheitsrisiko für den Bediener der Anlage darstellen. Schließlich stellt das Fadenführungselement am Magnetringrotor eine Unwucht dar, die mit zunehmender Drehzahl der Spindel schwingungsbedingt immer problematischer wird.

Die Aufgabe der Erfindung besteht deshalb in der Schaffung einer Vorrichtung und eines Verfahrens zum Aufspulen und Verdrillen von faserförmigen Material in Ringspinn- und Ringzwirnmaschinen, mit denen die Arbeitsgeschwindigkeit der Maschinen wesentlich erhöht, eine höhere Produktivität beim Ringspinnen erzielt sowie der zeitliche und materielle Aufwand für Montage und Service der Vorrichtung gesenkt werden kann.

Gelöst wird diese Aufgabe durch die beschreibenden Merkmale der Vorrichtung gemäß Patentanspruch 1. Vorteilhafte Weiterbildungen der Vorrichtung werden von den Merkmalen der Patentansprüche 2 bis 12 gekennzeichnet. Das geschaffene Verfahren beschreiben die Merkmale des Patentanspruchs 13. Eine effiziente Ausgestaltung des Verfahrens wird durch Patentanspruch 14 beansprucht.

Mit der erfindungsgemäßen Lösung wird ein supraleitendes Magnetlager (SMB) vorgeschlagen, das einen permanentmagnetischen (PM) Ring als Rotor umfasst, der über einem Supraleiter als Stator mit Kühlung berührungslos aber stabil schwebt. Dabei ist der jeweilige Rotor zur zugeordneten Spindel koaxial angeordnet und der aufzuwickelnde Faden wird in dem Spalt zwischen Rotor und Stator zum Umlauf gebracht. Eine effiziente und variabel anpassbare Ausbildung der Vorrichtung wird dadurch erzielt, indem mindestens zwei hochtemperatursupraleitende Statoren zusammen mit ihren thermisch verbundenen Kühleinrichtungen berührungslos und parallel zueinander entlang des Verlaufes der Spindelreihe angeordnet sind sowie im Magnetfeld des durchgängigen Zwischenraumes zwischen den jeweils benachbarten Statoren die koaxial zur Spindel ausgerichteten magnetfelderzeugenden Rotoren magnetisch schwebend eingebracht sind. Eine zusätzliche Erhöhung der Stabilisierung der Position im Magnetlager wird erreicht, wenn die magnetfelderzeugenden Rotoren mit ferromagnetischen Magnetflusssammlern versehen sind, die zur Erhöhung der Feldstärke und Führung des Magnetfeldes zum Hochtemperatur-Supraleiter hin dienen. Eine kostenmäßige Senkung für den materiellen Aufwand wird vorteilhaft erreicht, wenn die hochtemperatursupraleitenden Statoren aus jeweils mindestens zwei HTS-Bulk-Elementen bestehen, die entlang der Längenausdehnung der Statoren abschnittsweise getrennt voneinander ausgebildet und den jeweiligen magnetfelderzeugenden Rotoren zugeordnet sind.

Für eine einfache und zeitreduzierende Montage ist es von Vorteil, wenn die hochtemperatursupraleitenden Statoren aus schichtförmig zusammengefügtem Material bestehen und in ihrer Längenausdehnung band- oder kabelförmig ausgebildet sind. Effektiv wird ein einfacher und materialsparender Aufbau der Vorrichtung erreicht, indem die hochtemperatursupraleitenden Statoren aus einer thermisch isolierten Rohr-in-Rohr-Konfiguration gebildet werden, bei der das innere, mit dem HTS-Stator verbundene "kalte" Rohr eine Temperatur aufweist, die unterhalb der supraleitenden kritischen Temperatur liegt und das äußere Rohr die umgebende Raumtemperatur annimmt. Günstig erweist sich die Ausbildung der Vorrichtung für die Anwendung hoher Arbeitsgeschwindigkeiten, wenn das äußere Rohr aus einem Material gebildet wird, das eine zur Erzeugung von Wirbelströmen geeignete hohe elektrische Leitfähigkeit aufweist und dadurch eine zusätzliche magnetische Stabilisierung während des Drehspinn- und Verdrillungsbetriebes bewirkt. Eine stabile magnetische Lagerung der Rotoren bei einem gleichzeitig geringen Kostenaufwand wird vorteilhaft dadurch erreicht, indem die Statoren aus jeweils einem YBaCuO - Kristall der Zusammensetzung $Y_1Ba_2Cu_3O_x$ (Y123) oder einem Einkristall der REBaCuO - Gruppe der Zusammensetzung $RE_1Ba_2Cu_3O_x$ (RE-Seltene Erden) sowie der Supraleiter der Wismut-Familie BiSrCaCuO gebildet werden.

Mit der vorliegenden Erfindung werden technische und wirtschaftliche Verbesserungen der Maschinen durch die Verwendung von neuen linearen, wie supraleitende HTS Bulk-Stator-Anordnungen erzielt. Die erfindungsgemäße Vorrichtung erlaubt einen nahezu reibungslosen Hochgeschwindigkeitsbetrieb der Rotoren. Erreicht wird dies durch die stark vereinfachte Stator-Aufhängung und der möglichen simultanen Kühlung aller beteiligten Statoren.

Die geschaffene Lösung ebnet den Weg für eine modulare Bauweise und kollektiver Kühlung mittels flüssigem Stickstoff LN2. Zudem werden die HTS Material- und Maschine-Kosten sionifikant reduziert.

Nachfolgend soll die Erfindung anhand eines Ausführungsbeispiels näher erläutert werden. In den Wiedergaben der Zeichnung zeigen dazu erläuternd

**Fig. 1:** die schematische Vergleichsdarstellung der bisherigen zur neuen Magnetlagerung der Rotoren,

**Fig. 2:** die perspektivische Darstellung der Magnetlagerung mit drei Statoren,

**Fig. 3:** die Querschnittsdarstellung der Magnetlagerung mit drei Statoren,

**Fig. 4:** die perspektivische Darstellung der Magnetlagerung mit zwei Statoren,

**Fig. 5:** die Querschnittsdarstellung der Magnetlagerung mit zwei Statoren,

**Fig. 6:** der schematische Innenaufbau des Stators,

**Fig. 7:** die prinzipielle Darstellung der zusätzlichen Stabilisierung des Rotors und

**Fig. 8:** die Umfassungsbandage des Rotors zwecks Ausgleich der dynamischen Kräfte.

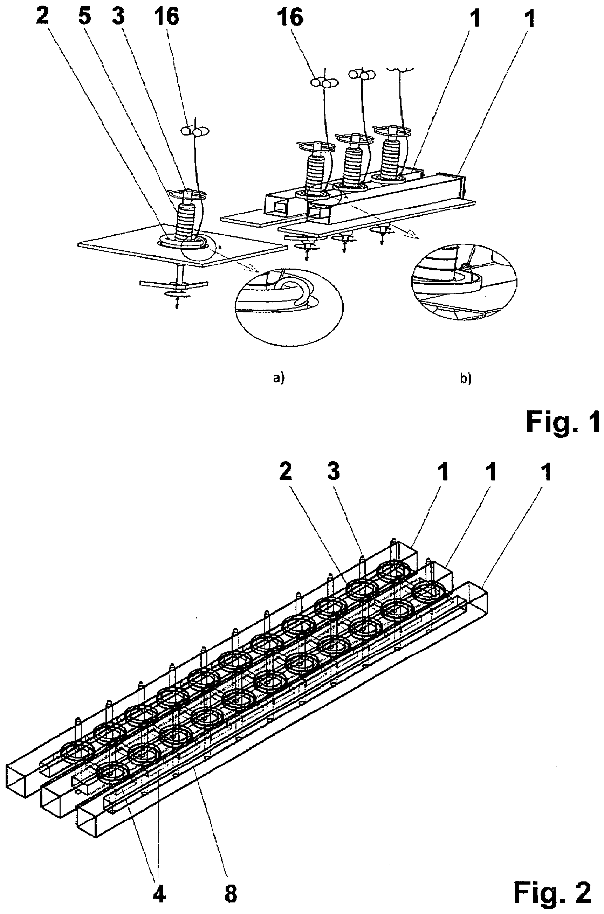

Mit der Figur 1 wird schematisch ein Vergleich zwischen der konventionellen Ring-Einfachgarnverzwimung (a) und des HTS-Hochgeschwindigkeits-Ringspinnverfahrens mittels einer magnetisch reibungsfrei aufgehängten Wickelring- und Läuferkonstruktion (b) wiedergegeben. Dazu sind die Spindeln 3 zusammen mit dem zu Spulen 5 aufgewickelten Garn zwischen zwei parallel angeordneten Hochtemperatursupraleiter-Statoren 1 magnetisch gelagert. In beiden Anordnungen kommen ringförmige magnetisch gelagerte magnetfelderzeugende Rotoren 2 zur Anwendung. Die Zuführung des aufzuwickelnden Garnes erfolgt durch das Zuführungssystem 16 der Maschine. Der Unterschied zwischen beiden Lösungen besteht in der Ausbildung des Magnetlagers und dem jeweils erforderlichen Kühlsystem des Hochtemperatursupraleiters. Konventionell ist das HTS-Magnetlager koaxial zu jeder Spindel 3 angeordnet und das Kühlsystem an jedes einzelne Lager in aufwendiger Form angepasst. Bei der erfindungsgemäßen Magnetlagerung hingegen erfolgt die magnetische Lagerung zwischen zwei benachbarten und sich entlang der Spindelreihe erstreckenden HTS-Statoren. Das erforderliche Kühlungssystem ist dabei so ausgebildet, dass eine simultane Kühlung aller Statoren auf einfache Weise ermöglicht wird.

Die in Figur 2 dargestellte perspektivische Ansicht zeigt das supraleitende Magnetlager mit drei Statoren 1. Die Rotoren 2 sind als permanentmagnetische Ringe mit integriertem Läufer (z.B. Ösen) ausgebildet. Die mit Hochtemperatursupraleitern (HTS) versehenen Statoren 1 verlaufen parallel zueinander und entlang der Spindelreihe. Im Zwischenraum zwischen jeweils zwei benachbarten Statoren 1 sind die Rotoren 2 magnetisch gelagert. Weiterhin besteht die Möglichkeit nach Bedarf auch weitere Statoren 1 parallel anzuordnen. Im Inneren der als Rohr 9 ausgebildeten Statoren 1 ist ein kleineres Rohr 8 mit darauf angeordneten HTS-Supraleitern eingebracht. Diese supraleitenden Materialien 4 sind entlang der Längsausdehnung des Rohres 8 abschnittsweise derart aufgebracht, dass sie die vorgesehene Lageposition des jeweiligen Rotors 2 herbeiführen. Die geschaffene Lösung ist in Aufbau und Design den herkömmlichen Ringspinnmaschinen angepasst. Aufgrund der linearen Struktur folgt die Innovation dem traditionellen Ringspinnmaschinen-Design und eliminiert die Notwendigkeit für große Ringspinnmaschinenänderungen, wenn konventionelle Ringläufergeräte durch supraleitende Magnetlager (SMB) in Serie ersetzt werden. Dabei arbeitet das System berührungslos und weist eine extrem geringe Rotationsreibung auf.

Durch die freie Aufhängung der Rotor-Kombination oberhalb des HTS-Stators 1 und dessen Rotation mit nahezu Spindeldrehzahl kann die Reibungswärme des Rotors 2 auch bei weiterer Erhöhung der Rotorgeschwindigkeit deutlich eliminiert werden. Dabei wird im dynamischen Prozess nur eine geringe Reibungskraft zwischen Faden und Läufer erzeugt. Durch die generierte Drehung des Rotors 2 wird die Faden-Läufer-Reibungswechselwirkung erheblich reduziert, wodurch ein großer Teil der Wärmequelle ausgeschaltet wird. Der Rotor 2 und der Stator 1 sind dabei so gestaltet, dass zwischen dem Rotor 2 und dem Stator 1 axial beabstandet und koaxial zur Spindel 3 jeweils ein kreisrunder Luftspalt gebildet wird. Der Faden wird durch den rotierenden Läufer geführt und kann auf den rotierenden Spulenkörper gewickelt werden. Im Gegensatz zu bisherigen Lagerlösungen, bei denen benachbarte Spindeln 3 bei Raumtemperaturbedingungen in der Durchführung eines Kryostaten laufen, sind bei der neuen Lösung die Spindeln 3 nicht getrennt und haben einen offenen Raum entlang der Spindelreihe. Durch diese Konstruktion wird eine gemeinsame LN2-Kühlung einer Reihe von entsprechenden Statoren 1 mit einem großen Freiraum möglich. Weiterhin können auf diese Weise Spindeln 3 und Spulen viel einfacher gewartet oder ausgetauscht werden.

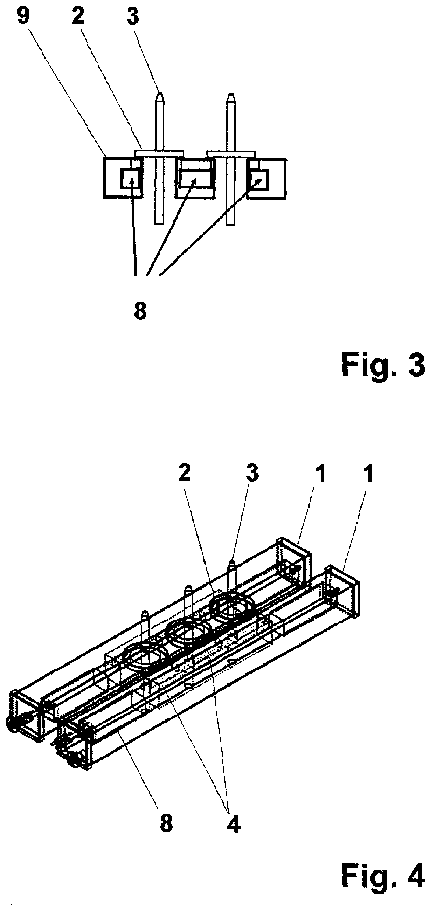

Mit Figur 3 wird der schematische Querschnittaufbau der aus drei Statoren 1 gebildeten Magnetlagerung wiedergegeben. Ersichtlich wird die Anordnung der inneren Rohre 8 im jeweiligen äußeren Rohr 9. Im Zwischenraum zwischen jeweils zwei benachbarten Statoren 1 sind die Rotoren 2 mit den jeweils zugehörigen Spindeln 3 magnetisch aufgehangen. Zwischen den Rohren (8;9) wird die simultane Kühlung aller Supraleiter durch eine Kühlung mittels flüssigem Stickstoff (LN2) durchgeführt.

Die Darstellung der Figur 4 zeigt die perspektivische Ansicht einer aus zwei Statoren 1 bestehenden Magnetlagerung. Auch bei dieser Ausführung sind die HTS-Supraleiter 4 abschnittsweise entlang des Längsverlaufes der Statoren 1 auf dem inneren Rohr 8 aufgebracht und lagemäßig so positioniert, dass sie die einzunehmenden Position der Spindeln 3 magnetisch herbeiführen. Darüberhinaus ist auch die Möglichkeit vorgesehen, den HTS-Supraleiter 4 band- oder kabelförmig zu gestalten, der bei der Montage über die gesamte Länge des Stators 1 auf dem inneren Rohr 8 aufgebracht wird. An den jeweiligen vorgesehenen magnetischen Lagerstellen des Rotors 2 wird der in der Regel schichtweise aufgebaute HTS-Supraleiter bereits in der Vorfertigung den zu erzeugenden Magnetstärken angepasst.

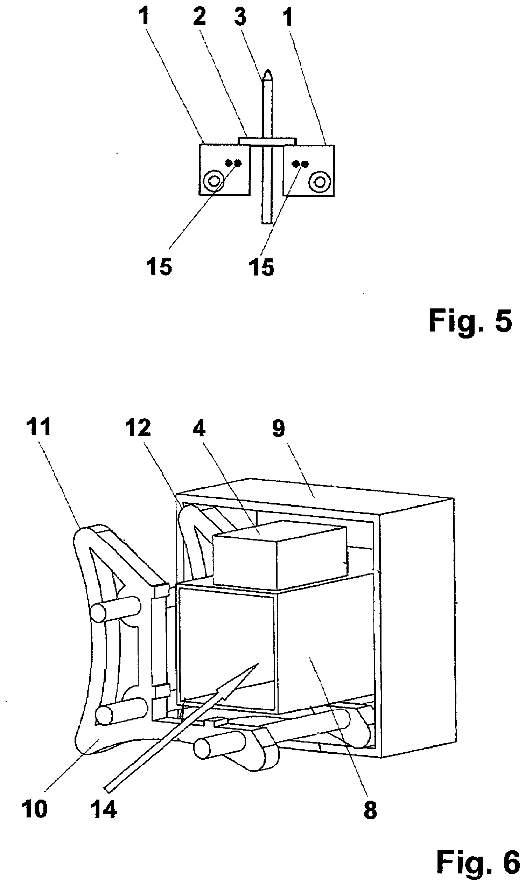

Eine Querschnittsdarstellung der aus zwei Statoren 1 gebildeten Magnetlagerung kann der Figur 5 entnommen werden. Neben den bereits geschilderten Lagerungen des Rotors 2 können der schematischen Darstellung die in den Innenraum der Statoren 1 hinein- und herausführende Kühlleitungen 15 entnommen werden.

Der konstruktive Innenaufbau des Stators 1 wird aus der bildlichen Wiedergabe der Figur 6 ersichtlich. Dabei stellt das quadratische äußere Rohr 9 die Vakuumkammer für das innere ebenfalls quadratische Rohr 8 dar. Der HTS-Supraleiter 4 ist auf den inneren kalten Rohr 8 geklebt. In das innere Rohr 8 wird flüssiger Stickstoff als Kühlmittel eingeführt. Die mechanische Fixierung des mit dem HTS-Supraleiter 4 verbundenen inneren Rohres 8 erfolgt durch aus Glasfaserstrukturen bestehende abstandshaltende Baugruppen 10. Diese sind so gestaltet, dass sie lediglich an den punktförmigen Auflagen 11, 12 eine wärmeleitende Verbindung mit dem äußeren Rohr 9 aufweisen. Dadurch wird eine wärmeleitende Verbindung zwischen dem "kalten" inneren Rohr 8 und den an die Raumtemperatur angepassten äußeren Rohr 9 weitestgehend verhindert. Da die Balken aus einer leichten Al-Legierung bestehen, kann das Design sehr kompakt und mit geringem Gewicht aufgebaut werden. Zudem wird durch das AL-Legierungsmaterial des Kryostaten eine hohe thermische Verbindung zwischen dem inneren Rohr 8 und dem HTS-Supraleiter 4 erreicht. Allerdings muss der hohe thermische Ausdehnungskoeffizient der Al-Legierung bei Raumtemperatur bei der Bestimmung und Fixierung der genauen longitudinalen Position der supraleitenden Statoren 1 in den 4-5 m langen Trägerelementen berücksichtigt werden.

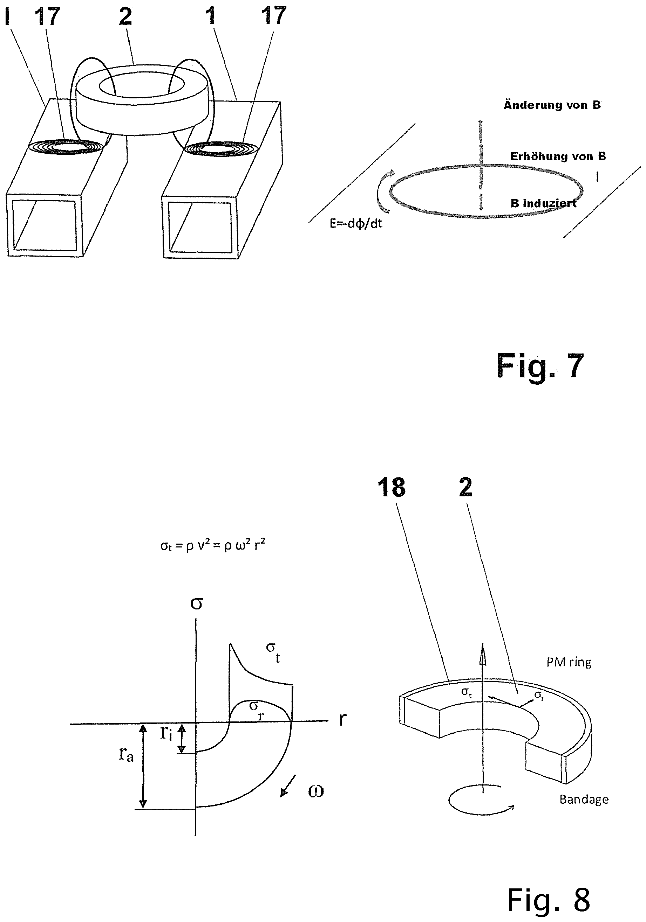

Die prinzipielle Darstellung einer zusätzlichen Stabilisierung der Lageposition des Rotors 2 ist aus Figur 7 ersichtlich. Neben der Levitation des fadenführenden ringförmig ausgebildeten Rotors 2 erfolgt innovativ eine zusätzliche Stabilisierung durch elektrische Wirbelströme 17, die im Kryostat- und und den Statoren 1 induziert werden. Das innere und äußere Rohr bestehen aus einer elektrisch leitfähigen Aluminiumlegierung. Dadurch wird der rotierende Rotor 2 über einem metallischen Al-Blech schweben. Zwei Effekte können dadurch zur Stabilisierung des rotierenden Rotors 2 beitragen. Nach der Lenz'schen Regel ist die Richtung jeder magnetischen Induktionswirkung derart, dass sie der Ursache der Wirkung entgegengesetzt wirkt. Somit ist die Richtung der magnetischen Kraft auf den bewegten Magneten entgegengesetzt zu seiner Bewegung. Der induzierte Strom versucht, den aktuellen Status "quo" zu erhalten, indem er der Bewegung oder einer Flussänderung entgegenwirkt. Oberhalb der Statoren 1 existieren eine Auftriebskraft in normaler Richtung zur leitenden Ebene und eine Widerstandsbremskraft entgegen der Drehrichtung. Entsprechend tragen beide Kräfte zu einem zusätzlichen Halten und Stabilisieren des rotierenden Rotors 2 beim Wickeln und Verdrehen bei. Eine weitere Ausführungsform ist die erzeugte Bremskraft, die durch die Veränderung der Umfangsmagnetisierung des ringförmigen Rotors 2 eine schnelle Abbremsung des rotierenden Rotors 2 bewirkt. Bei niedriger Geschwindigkeit ist die Widerstandskraft proportional zur Geschwindigkeit $v = \omega/r$ und sie ist größer als die Auftriebskraft, die proportional zu $v^2$ ist.

Mit zunehmender Geschwindigkeit des Rotors 2 erreicht die Widerstandskraft ein Maximum und nimmt mit $1/(v)^{1/2}$ ab. Die Auftriebskraft, die den Rotor 2 stabilisiert, nimmt dagegen bei niedriger Geschwindigkeit mit $v^2$ zu und überholt die Widerstandskraft mit zunehmender Geschwindigkeit. Das Verhältnis von Auftriebs- zu Widerstandskräften ist von großer praktischer Bedeutung und ergibt sich zu $f_L/f_D = v/v_i$, wobei $v$ und $v_i$ die Geschwindigkeiten des magnetischen Dipols über dem leitenden Blech und das entsprechende positive und negative Bild sind, das sich mit der Geschwindigkeit $v_i$ nach unten ausbreitet.

Mit der Grafik der Figur 8 wird das prinzipielle Verhalten der Rotoren 2 bei Hochgeschwindigkeits-Ringspinnanwendungen wiedergegeben. Bei der erfindungsgemäßen Lösung für Hochgeschwindigkeiten sind die Rotationsreibung und die dynamischen Effekte der Magnetlager von besonderer Bedeutung. In diesem Bereich sind die prinzipiellen Vorteile von supraleitenden Lagern gegenüber konventionellen Lagern signifikant. Die supraleitenden passiv-magnetischen Lager weisen eine wesentlich geringere Reibung auf als konventionelle Wälzlager, mindestens um einen Faktor von vier Dekaden. Selbst im Vergleich zu druckbeaufschlagten Luftlagern liegt die Reibung der passiv-magnetischen HTS-Lager im Promillebereich und ist somit überragend klein. Diese extrem geringe Reibung ist die physikalische Grundlage für die innovative Ringspinntechnologie bis hin zu höchsten Spindeldrehzahlen.

Ein weiterer kritischer Punkt der Ringrotordynamik sind die Fliehkräfte. In der vorliegenden Erfindung stehen Rotationsgeschwindigkeiten des permanentmagnetischen Rotors 2 mit dem Fadenführer bis zu 50 000 U/min im Fokus. Ein Rotor 2 der Größe 60 cm x 40 cm x 1 cm, der als Verdrillungs- und Rotationselement dient, leidet unter den enormen Fliehkräften, die den Arbeitsring zerstören können. In einem ersten Ansatz sollte man die maximale Zugkraft bzw. Kraftdichte durch den Tangentialvektor am Innenradius $r_i$ betrachten.

$$\sigma_t = \rho\, v^2 = \rho \omega^2\, r^2$$

Beim Drehen des ringförmigen Rotors 2 entstehen unterschiedliche Fliehkräfte, die den Rotor 2 zerstören können. Die höchsten mechanischen Kräfte treten am Innenradius eines rotierenden Ringes auf. Der Wert der Zugfestigkeit von gesintertem NdFeB liegt bei etwa 80 - 90 MPa (12 000 psi). Bei einer Rotationsgeschwindigkeit von 50 000 U/min um die Spindeln erleidet ein PM Ring aus NdFeB mit der Größe 60 x 40 x 10 jedoch eine maximale tangentiale Kraftdichte von ~185 MPa, mehr als ein Faktor zwei der intrinsischen Materialzugfestigkeit. Dementsprechend müssen die dynamischen Kräfte durch eine entsprechende Umfassungsbandage 18 in Umfangsrichtung des Rotors 2 ausgeglichen werden.

Der Bandage-Ring 18 sollte aus Werkstoffen mit hoher Zugfestigkeit bestehen, entweder metallisch wie nichtmagnetischer Edelstahl, hochfesten Al- oder Mg-Legierungen, oder ein nichtmetallischer Ring aus Glas- oder Kohlefaserverbindungen. Im besten und optimalen Fall sorgt die Sicherheitsringverstärkung für einen Vordruck auf den Rotor 2 schon bei Drehzahl Null und verhindert dann jegliche Risse oder Defekte des Nd-FeB Magnetringes unter den nominalen Betriebsdrehzahlen. Als praktische Lösung wurde eine Sicherheitsringdicke von 3 mm Al-Legierung AL7075 gewählt und mit dem Rotor 2 durch thermisches Aufschrumpfen fest verbunden.

Bezugszeichen

| 1 | Stator |
|---|---|
| 2 | Rotor |
| 3 | Spindel |
| 4 | HTS-Supraleiter |
| 5 | Spule |
| 6 | Garn |
| 7 | Läufer |
| 8 | Inneres Rohr |
| 9 | Äußeres Rohr |
| 10 | abstandshaltende Baugruppe |
| 11 | punktförmige Auflage |
| 12 | punktförmige Auflage |
| 13 | Bandage |
| 14 | Arbeitsgas N2 |
| 15 | Kühlleitungen |
| 16 | Zuführungssystem |
| 17 | Elektrischer Wirbelstrom |
| 18 | Bandage |

**Nichtpatentliteratur**

[1] Landau, LD., Lifschitz E. M., Mechanik, Elektrodynamik, Akademie-Verlag Berlin, 1973

[2] Smythe, W.R. "On Eddy Currents in a Rotating Disk", Transactions 681, Vol. 61, 1942

[3] Zhigang Xia und Weilin Xu, A Review of Ring Stable Yarn Spinning Method

Entwicklung und ihre Trendvorhersage, Journal of Natural Fibers, 10:1, b2-81.

Innovativer Zwirnmechanismus basierend auf supraleitender Technologie für höhere Produktivität in Ringspinnmaschinen, Textile Research Journal, 84, (2014) 8, S. 871-880.

[4] Werfel F et al. "Centrifuge advances using HTS magnetic bearings", Physica C 354, pp. 13-17, 2001.

[5] Hussain M. (2010) Theoretische Analyse von supraleitenden Magnetlagern und deren Eignung im Ring/Trawler-System in der Ringspinnmaschine. Technische Universität (TU) Dresden, Deutschland.

[6] Rahman M and Golam N, Recent Innovations in Yarn Technology: A Review, International Journal of Scientific and Research Publications, Volume 4, Issue 6, June 2014 ISSN 2250-3153.

[7] Hossain, M.; Abdkader, A.; Cherif, C.; Sparing, M.; Berger, D.; Fuchs, G.; Schultz, L. (Siehe online unter https://doi.org/10.1177/0040517513512393)

Supraleitendes Magnetlager als Drallelement in Textilmaschinen, IEEE Transactions on Applied Superconductivity, 25 (2015) 3, S. 3600504/1-4.8] Sparing, M.; Hossain, M.; Berger, D.; Berger, A.; Abdkader, A.; Fuchs, G.; Cherif, C.; Schultz, L
(Siehe online unter https://doi.org/10.1109/TASC.2014.2366001)Cryogenic System for the Integration of a Ring-Shaped SMB in a Ring-Spinning Tester, IEEE Transactions on Applied Superconductivity, 26 (2016) 3, S. 3601105/1-5.

[8] Berger, A.; Hossain, M.; Sparing, M.; Berger, D.; Fuchs, G.; Abdkader, A.; Cherif, C.; Schultz, L. (Siehe online unter https://doi.org/10.1109/TASC.2016.2524502) Dynamics of Rotating Superconducting Magnetic Bearings in Ring Spinning, IEEE Transactions on Applied Superconductivity, 26 (2016) 3, S. 3600804/1-4.

[9] Sparing, M.; Berger, A.; Wall, F.; Lux, V.; Hameister, S.; Berger, D.; Hossain, M.; Abdkader, A.; Fuchs, G.; Cherif, C.; Schultz L. https://doi.org/10.1109/TASC.2016.2524641) Mathematische Modellierung des dynamischen Fadenlaufs in Abhängigkeit von der Spindeldrehzahl in einem Ringspinnprozess, Textile Research Journal, 86 (2016) 11, S. 1180-1190.

[10] Hossain, M.; Telke, C.; Abdkader, A.; Cherif, C., Beitelschmidt M. https://doi.org/10.1177/0040517515606355), Messmethoden der dynamischen Fadenspannung in einem Ringspinnprozess, Fibres & Textiles in Eastern Europe, 1 (2016) 115, S. 36-43.

[11] Hossain, M.; Abdkader, A.; Nocke, A.; Reimar, U; Krzywinski, F.; Hasan, Mmb.; Cherif, C. (Siehe online unter https://doi.org/10.5604/12303666.1172098) Mathematische Modellierung des dynamischen Fadenverlaufs in Abhängigkeit von der Spindeldrehzahl in einem Ringspinnprozess auf Basis eines supraleitenden Magnetlagers, Textile Research Journal, 87 (2017) 8, S. 1011-1022.

[12] Hossain, M.; Telke, C.; Sparing, M.; Abdkader, A.; Nocke, A; Unger, R; Fuchs, G; Berger, A; Cherif, C.; Beitelschmidt, M; Schultz, L. https://doi.org/10.1177/0040517515606355)Modellierung des Fadenlaufs am Ringspinnverfahren mit supraleitendem Hochleistungsdrallerteilungssystem. Melliand Textilberichte 1(2017), S. 30-32.

[13] Hossain, M.; Abdkader, A.; Cherif, C. Analysis of yarn properties in superconducting magnetic bearing based ring-spinning process. Textile Research Journal 88 (2018) 22, S. 2624-2638, Hossain, M.; Abdkader, A.; Cherif, C. https://doi.org/10.1177/0040517517725122), Mathematische Modellierung des dynamischen Fadenverlaufs unter Berücksichtigung des Ballonsteuerungsrings und der Elastizität des Fadens im Ringspinnprozess auf der Basis des supraleitenden Lagerzwirnelements. Fibres & Textiles in Eastern Europe, 26 (2018) 5, S. 32-40.

[14] Hossain, M.; Telke, C.; Abdkader, A.; Sparing, M.; Espenhahn T.; Hühne, R.; Cherif, C.; Beitelschmidt, M., https://doi.org/10.5604/01.3001.0012.2528)Theoretisches Modell des Fadenlaufs unter Berücksichtigung des Ballonsteuerungsrings und der Fadenelastizität in einer Ringspinnmaschine mit supraleitendem Magnetlager. In: CD-Rom. 18th AUTEX World Textile Conference (Turkei), June 20-22, 201.

[15] Hossain, M., Telke, C.; Abdkader, A.; Espenhahn, T.; Cherif, C.; Beitelschmidt, M. 300 prozentige Leistungssteigerung der Verspinnung von Chemiefasern auf der Turboringspinnmaschine mit reibungsfreiem supraleitenden Drallerteilungssystem. In: Tagungsband. 58. Dornbirn Global Fiber Congress, Österreich, 11. bis 13. September 2019.

[16] Hossain, M., Abdkader, A.; Cherif, C.; Sparing, M.; Espenhahn, T.; Hühne, R.; Nielsch, K. In situ measurement of dynamic yarn path in a turbo ring spinning process based on superconducting magnetic bearing twisting system, Textile Research Journal (2019).

[17] Hossain, M.; Sparing, M.; Espenhahn T.; Abdkader, A.; Cherif, C.; Hühne, R.; Nielsch, K., https://doi.org/10.1177/0040517519879899, Influence of the magnet aspect ratio on the dynamic stiffness of a rotating superconducting magnetic bearing, J. Phys. D (2019).

[18] Espenhahn, T., W Underwald, F., Möller, M., Sparing, M., Hossain, M., Fuchs, G., Abdkader, A. , Cherif, C., Nielsch, K., Hühne, R., https://doi.org/10.1088/1361-6463/ab4ed4), Neue Generation Turbo-Ringspinnmaschine bis zur Winkelspindeldrehzahl von 50.000 U/min. In: ITMA INNOVATION LAB SPEAKERS PLATFORM, TMA 2019 (Barcelona) June 20-26, 2019.

**Patentansprüche**

1. Vorrichtung zum Aufspulen und Verdrillen von Fasermaterial in Ringspinn- oder Ringzwirnmaschinen wobei die Vorrichtung Statoren (1) aufweist, die mindestens ein hochtemperatursupraleitendes Material und eine Statorkühlung aufweisen sowie mit reihenweise angeordneten drehbaren Spindeln (3), denen Rotoren (2), ausgebildet als permanentmagnetische Ringe, koaxial zugeordnet sind und die Rotoren (2) zusammen mit einem verbundenen Läufer zum Führen und Aufwickeln des Fadens auf der jeweiligen Spindel (3) dienen, **dadurch gekennzeichnet, dass** mindestens zwei der hochtemperatursupraleitenden Statoren (1) zusammen mit ihren thermisch verbundenen, als Kryostaten ausgebildeten, Kühleinrichtungen berührungslos und parallel zueinander entlang des Verlaufes der Spindelreihe angeordnet sind sowie im Magnetfeld des durchgängigen Zwischenraumes zwischen den jeweils benachbarten Statoren (1) die koaxial zur Spindel (3) ausgerichteten magnetfelderzeugenden Rotoren (2) magnetisch schwebend eingebracht sind.

2. Vorrichtung nach Anspruch1, **dadurch gekennzeichnet, dass** die magnetfelderzeugenden Rotoren (2) mit ferromagnetischen Magnetflusssammlern versehen sind, die zur Erhöhung der Feldstärke und Führung des Magnetfeldes zum Hochtemperatur-Supraleiter (4) hin dienen.

3. Vorrichtung nach Anspruch 1, **dadurch gekennzeichnet, dass** die hochtemperatursupraleitenden Statoren (1) aus jeweils mindestens zwei Hochtemperatursupraleiter-Bulk-Elementen bestehen, die abschnittsweise getrennt voneinander ausgebildet und den jeweiligen magnetfelderzeugenden Rotoren (2) zugeordnet sind.

4. Vorrichtung nach Anspruch 1, **dadurch gekennzeichnet, dass** die hochtemperatursupraleitenden Statoren (1) aus schichtförmig zusammengefügtem Material bestehen und in ihrer Längenausdehnung band- oder kabelförmig ausgebildet sind.

5. Vorrichtung nach Anspruch 1, **dadurch gekennzeichnet, dass** die hochtemperatursupraleitenden Statoren aus einer thermisch isolierten Rohr-in-RohrKonfiguration gebildet werden, bei der das innere, mit dem Hochtemperatursupraleiter-Stator (1) verbundene "kalte" Rohr (8) eine Temperatur aufweist, die unterhalb der supraleitenden kritischen Temperatur liegt und das äußere Rohr (9) die umgebende Raumtemperatur annimmt.

6. Vorrichtung nach den Ansprüchen 1 und 5, **dadurch gekennzeichnet, dass** das äußere Rohr (9) aus einem Material gebildet wird, das eine zur Erzeugung von Wirbelströmen geeignete hohe elektrische Leitfähigkeit aufweist und dadurch eine zusätzliche magnetische Stabilisierung während des Drehspinn- und Verdrillungsbetriebes bewirkt.

7. Vorrichtung nach Anspruch 1, **dadurch gekennzeichnet, dass** die Statoren (1) aus jeweils einem YBaCuO - Kristall der Zusammensetzung $Y_1Ba_2Cu_3O_x$ (Y123) oder einem Einkristall der RE-BaCuO - Gruppe der Zusammensetzung $RE_1Ba_2Cu_3O_x$ (RE-Seltene Erden) sowie der Supraleiter der Wismut-Familie BiSrCaCuO gebildet werden.

8. Vorrichtung nach Anspruch 1, **dadurch gekennzeichnet, dass** die Statoren (1) aus jeweils aus mehreren aneinander gereihten oder aneinander gewachsenen Einkristallen bestehen.

9. Vorrichtung nach Anspruch 1, **dadurch gekennzeichnet, dass** die magnetfelderzeugenden Rotoren (2) zwecks Kompensierung ihrer Fliehkräfte jeweils eine umgebende Bandage (13) aufweisen, die aus einem Material mit hoher Zugfestigkeit besteht.

10. Vorrichtung nach Anspruch 1, **dadurch gekennzeichnet, dass** die Kryostaten zwecks zusätzlicher Stabilisierung mittels eines Materials mit einer hoher elektrischen Leitfähigkeit ein elektrodynamisch unterstütztes Schweben sowie aufgrund einer Wirbelstromerzeugung in der metallischen Oberfläche des Kryostaten bewirkt.

11. Vorrichtung nach den Ansprüchen 1 und 5, **dadurch gekennzeichnet, dass** das innere Rohr (8) durch Zuführung von flüssigem Stickstoff gekühlt wird und zwischen dem inneren und äußeren Rohr (8;9) eine thermische Vakuumisolierung sowie durch punktförmige Auflagen (11;12) von zwischen den Rohren (8;9) eingebrachten mechanischen abstandshaltender Baugruppen (10) eine thermische Wärmeleitung zwischen dem inneren und äußeren Rohr (8;9) verhindert wird.

12. Vorrichtung nach den Ansprüchen 1 und 5, **dadurch gekennzeichnet, dass** das innere Rohr (8) durch eine Verbindung mit einem Kryokühler gekühlt wird.

13. Verfahren zum Aufspulen und Verdrillen von Fasermaterial auf reihenweise angeordneten Spindeln (3) innerhalb von Ringspinn- oder Ringzwirnmaschinen, bei dem die Lagerung der als Rotoren (2) der Spindeln (3) dienenden permanentmagnetische Ringe in Hochtemperatursupraleiter-Magnetlagern erfolgt, **dadurch gekennzeichnet, dass** eine Vorrichtung nach einem der Patentansprüche 1 bis 12 bereitgestellt wird, die den Spindeln (3) koaxial zugeordneten Rotoren (2) innerhalb eines durchgängigen Zwischenraumes zwischen zwei mit Kryostaten verbundenen sowie parallel und berührungslos entlang der Spindelreihe angeordneten Statoren (1) magnetisch schwebend gelagert werden, wobei durch die mit den Statoren (1) verbundenen und dadurch ebenfalls sich entlang der Spindelreihe erstreckenden Kryostaten eine simultane Kühlung aller Statoren (1) durchgeführt wird.

14. Verfahren nach Anspruch 13, **dadurch gekennzeichnet, dass** die Kühlung der Statoren (1) durch die Zuführung von flüssigem Stickstoff über das sich entlang der Spindelreihe erstreckenden inneren Rohres (8) einer Rohr-in-Rohr-Verbindung des Kryostaten erfolgt, die thermische Isolierung zwischen innerem und äußerem Rohr (8;9) durch eine Vakuumisolation erfolgt und das rückgeführte "kalte" Arbeitsgas N2 (14) mittels einer kontinuierlichen maschinellen Rückkühlung kondensiert und verflüssigt sowie dem Kühlkreislauf wieder zugeführt wird.

**Claims**

1. Device for winding and twisting fibre material in ring spinning or ring twisting machines, wherein the device comprises stators which comprise at least one high-temperature superconducting material and a stator cooling, and having rotatable spindles which are arranged in rows and with which rotors, designed as permanent-magnetic rings, are coaxially associated, and the rotors, together with a connected armature, serve to guide and wind the yarn on the respective spindle, **characterised in that** at least two of the high-temperature superconducting stators (1), together with their thermally connected cooling devices designed as cryostats, are arranged contactlessly and parallel to one another along the course of the row of spindles, and the magnetic field-generating rotors (2), which are aligned coaxially with the spindle (3), are inserted in a magnetically floating manner in the magnetic field of the continuous intermediate space between the respectively adjacent stators (1).

2. Device according to claim 1, **characterised in that** the magnetic field-generating rotors (2) are provided with ferromagnetic magnetic flux collectors which serve to increase the field strength and guide the magnetic field towards the high-temperature superconductor (4).

3. Device according to claim 1, **characterised in that** the high-temperature superconducting stators (1) each consist of at least two high-temperature superconducting bulk elements which are formed separately from one another in sections and are associated with the respective magnetic field-generating rotors (2).

4. Device according to claim 1, **characterised in that** the high-temperature superconducting stators (1) consist of material joined together in layers and are designed to be ribbon-like or cable-like in their longitudinal extension.

5. Device according to claim 1, **characterised in that** the high-temperature superconducting stators are formed of a thermally insulated tube-in-tube configuration in which the inner "cold" tube (8) connected to the high-temperature superconducting stator (1) has a temperature below the superconducting critical temperature and the outer tube (9) assumes ambient room temperature.

6. Device according to claims 1 and 5, **characterised in that** the outer tube (9) is formed of a material having a high electrical conductivity suitable for generating eddy currents and thereby providing additional magnetic stabilisation during rotative spinning and twisting operation.

7. Device according to claim 1, **characterised in that** the stators (1) are each formed of a YBaCuO crystal of the composition $Y_1Ba_2Cu_3O_x$ (Y123) or a single crystal of the REBaCuO group of the composition $RE_1Ba_2Cu_3O_x$ (RE rare earths) and the superconductor of the bismuth family BiSrCaCuO.

8. Device according to claim 1, **characterised in that** the stators (1) each consist of several single crystals which are juxtaposed or grown together.

9. Device according to claim 1, **characterised in that** the magnetic field-generating rotors (2) each comprise a surrounding bandage (13) for the purpose of compensating their centrifugal forces, which bandage consists of a material having high tensile strength.

10. Device according to claim 1, **characterized in that** the cryostat, for the purpose of additional stabilisation, causes an electrodynamically supported floating by means of a material having a high electrical conductivity as well as due to an eddy current generation in the metallic surface of the cryostat.

11. Device according to claims 1 and 5, **characterised in that** the inner tube (8) is cooled by the supply of liquid nitrogen and a thermal vacuum insulation between the inner and outer tubes (8;9) and, by punctiform supports (11;12) of mechanical spacer assemblies (10) inserted between the tubes (8;9), thermal heat conduction between the inner and outer tubes (8;9) is prevented.

12. Device according to claims 1 and 5, **characterised in that** the inner tube (8) is cooled by connection to a cryocooler.

13. Method for winding and twisting fibre material on spindles (3) arranged in rows within ring spinning or ring twisting machines, in which the permanent-magnetic rings serving as rotors (2) of the spindles (3) are mounted in high-temperature superconductor magnetic bearings, **characterised in that** a device according to one of claims 1 to 12 is provided, the rotors (2), which are coaxially associated with the spindles (3), are mounted in a magnetically floating manner within a continuous intermediate space between two stators (1), which are connected to cryostats and are disposed in parallel and contactlessly along the row of spindles, wherein simultaneous cooling of all stators (1) is effected by the cryostats, which are connected to the stators (1) and thereby also extend along the row of spindles.

14. Method according to claim 13, **characterised in that** the cooling of the stators (1) is effected by the supply of liquid nitrogen via the inner tube (8), extending along the row of spindles, of a tube-in-tube connection of the cryostat, the thermal insulation between the inner and outer tubes (8; 9) is effected by vacuum insulation and the recirculated "cold" working gas N2 (14) is condensed and liquefied by means of continuous mechanical recooling and is supplied to the cooling circuit again.

**Revendications**

1. Dispositif de bobinage et de torsion de matériau fibreux dans des métiers à filer à anneaux ou des métiers à retordre à anneaux, dans lequel le dispositif présente des stators, qui présentent au moins un matériau supraconducteur à haute température et un refroidissement de stator, ainsi qu'avec des broches rotatives disposées en rangées, auxquelles sont associés de manière coaxiale des rotors réalisés en tant qu'anneau à aimantation permanente et les rotors conjointement avec un induit relié servent à guider et à enrouler le fil sur la broche respective, **caractérisé en ce qu'**au moins deux des stators supraconducteurs à haute température (1) sont disposés conjointement avec leurs systèmes de refroidissement reliés de manière thermique, réalisés en tant que cryostats sans contact et de manière parallèle les uns par rapport aux autres le long du contour de la rangée de broches et les rotors (2) de génération de champ magnétique orientés de manière coaxiale par rapport à la broche (3) sont introduits en flottement magnétique dans le champ magnétique de l'espace intermédiaire continu entre les stators (1) respectivement adjacents.

2. Dispositif selon la revendication 1, **caractérisé en ce que** les rotors (2) de génération de champ magnétique sont pourvus de collecteurs de flux magnétique ferromagnétiques, qui servent à augmenter l'intensité de champ et à guider le champ magnétique vers le supraconducteur à haute température (4).

3. Dispositif selon la revendication 1, **caractérisé en ce que** les stators supraconducteurs à haute température (1) sont constitués de respectivement au moins deux éléments en vrac supraconducteurs à haute température, qui sont réalisés par endroits de manière séparée l'un de l'autre et sont associés aux rotors (2) respectifs de génération de champ magnétique.

4. Dispositif selon la revendication 1, **caractérisé en ce que** les stators supraconducteurs à haute température (1) sont constitués d'un matériau assemblé en forme de couche et sont réalisés dans leur extension longitudinale en forme de bande ou de câble.

5. Dispositif selon la revendication 1, **caractérisé en ce que** les stators supraconducteurs à haute température sont formés à partir d'une configuration tuyau dans tuyau isolée thermiquement, où le tuyau « froid » intérieur (8) relié au stator supraconducteur à haute température (1) présente une température, qui est en dessous de la température critique supraconductrice et le tuyau extérieur (9) prend la température ambiante environnante.

6. Dispositif selon les revendications 1 et 5, **caractérisé en ce que** le tuyau extérieur (9) est formé à partir d'un matériau, qui présente une conductivité électrique élevée adaptée pour la génération de flux tourbillonnaires et entraîne ainsi une stabilisation magnétique supplémentaire pendant le fonctionnement de filage par rotation et de torsion.

7. Dispositif selon la revendication 1, **caractérisé en ce que** les stators (1) sont formés à partir de respectivement un cristal YBaCuO de la composition $Y_1Ba_2Cu_3O_x$(Y123) ou d'un monocristal du groupe REBaCuO de la composition $RE_1Ba_2Cu_3O_x$ (terres rares RE) et le supraconducteur de la famille du bismuth est formé à partir de BiSrCaCuO.

8. Dispositif selon la revendication 1, **caractérisé en ce que** les stators (1) sont constitués de plusieurs monocristaux alignés les uns contre les autres ou attenants les uns aux autres.

9. Dispositif selon la revendication 1, **caractérisé en ce que** les rotors (2) de génération de champ magnétique présentent, aux fins de la compensation de leurs forces centrifuges, respectivement un bandage enveloppant (13), qui est constitué d'un matériau avec une résistance à la traction élevée.

10. Dispositif selon la revendication 1, **caractérisé en ce que** les cryostats entraînent aux fins d'une stabilisation supplémentaire au moyen d'un matériau avec une conductivité électrique élevée un flottement soutenu de manière électrodynamique en raison d'une génération de flux tourbillonnaire dans la surface métallique du cryostat.

11. Dispositif selon les revendications 1 et 5, **caractérisé en ce que** le tuyau intérieur (8) est refroidi par amenée d'azote liquide et une isolation sous vide thermique entre le tuyau intérieur et le tuyau extérieur (8, 9) et une conduction thermique entre le tuyau intérieur et le tuyau extérieur (8, 9) est empêchée par des supports ponctuels (11, 12) de modules d'écartement (10) mécaniques introduits entre les tuyaux (8, 9).

12. Dispositif selon les revendications 1 et 5, **caractérisé en ce que** le tuyau intérieur (8) est refroidi avec un cryorefroidisseur par une liaison.

13. Procédé de bobinage et de torsion de matériau fibreux sur des broches (3) disposées en rangées à l'intérieur de métiers à filer à anneaux ou de métiers à retordre à anneaux, où le support des anneaux à aimantation permanente faisant office de rotors (2) des broches (3) a lieu dans des paliers magnétiques à supraconducteur à haute température, **caractérisé en ce qu'**un dispositif selon l'une quelconque des revendications 1 à 12 est fourni, les rotors (2) associés de manière coaxiale aux broches (3) sont supportés par flottement magnétique à l'intérieur d'un espace intermédiaire continu entre deux stators (1) reliés à des cryostats et disposés de manière parallèle et sans contact le long de la rangée de broches, dans lequel un refroidissement simultané de tous les stators (1) est mis en oeuvre par les cryostats reliés aux stators (1) et s'étendant ainsi également le long de la rangée de broches.

14. Procédé selon la revendication 13, **caractérisé en ce que** le refroidissement des stators (1) est effectué par l'amenée d'un azote liquide par l'intermédiaire du tuyau intérieur (8) s'étendant le long de la rangée de broches d'une liaison tuyau dans tuyau, l'isolation thermique entre le tuyau intérieur et le tuyau extérieur (8, 9) est effectuée par une isolation sous vide et le gaz de travail N2 (14) « froid » ramené est condensé et liquéfié au moyen d'un refroidissement de retour mécanique continu et est amené à nouveau au circuit de refroidissement.

a)                    b)

**Fig. 1**

**Fig. 2**

Fig. 3

Fig. 4

**Fig. 5**

**Fig. 6**

Änderung von B

Erhöhung von B

B induziert

I

E=-dφ/dt

## Fig. 7

$$\sigma_t = \rho \, v^2 = \rho \, \omega^2 \, r^2$$

σ

$\sigma_t$

$\sigma_r$

r

$r_i$

$r_a$

ω

18    2

$\sigma_t$

$\sigma_r$

PM ring

Bandage

## Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012100964 A1

- WO 20171178196 A1

**In der Beschreibung aufgeführte Nicht-Patentliteratur**

- **LANDAU, LD. ; LIFSCHITZ E. M.** Mechanik, Elektrodynamik. Akademie-Verlag Berlin, 1973
- **SMYTHE, W.R.** On Eddy Currents in a Rotating Disk. *Transactions 681,* 1942, vol. 61
- **ZHIGANG XIA UND WEILIN XU.** A Review of Ring Stable Yarn Spinning Method Entwicklung und ihre Trendvorhersage. *Journal of Natural Fibers,* vol. 10 (1), b2-81
- Innovativer Zwirnmechanismus basierend auf supraleitender Technologie für höhere Produktivität in Ringspinnmaschinen. *Textile Research Journal,* 2014, vol. 84 (8), 871-880
- **WERFEL F et al.** Centrifuge advances using HTS magnetic bearings. *Physica C,* 2001, vol. 354, 13-17
- **HUSSAIN M.** Theoretische Analyse von supraleitenden Magnetlagern und deren Eignung im Ring/Trawler-System in der Ringspinnmaschine. Technische Universität (TU) Dresden, 2010
- **RAHMAN M ; GOLAM N.** Recent Innovations in Yarn Technology: A Review. *International Journal of Scientific and Research Publications,* Juni 2014, vol. 4 (6), ISSN 2250-3153
- Supraleitendes Magnetlager als Drallelement in Textilmaschinen. *IEEE Transactions on Applied Superconductivity,* 2015, vol. 25 (3), 3600504, , 1-4.8, https://doi.org/10.1177/0040517513512393
- Cryogenic System for the Integration of a Ring-Shaped SMB in a Ring-Spinning Tester. *IEEE Transactions on Applied Superconductivity,* 2016, vol. 26 (3), 3601105, , 1-5, https://doi.org/10.1109/TASC.2014.2366001
- **BERGER, A ; HOSSAIN, M ; SPARING, M ; BERGER, D ; FUCHS, G. ; ABDKADER, A ; CHERIF, C ; SCHULTZ, L.** Dynamics of Rotating Superconducting Magnetic Bearings in Ring Spinning. *IEEE Transactions on Applied Superconductivity,* 2016, vol. 26 (3), 3600804, , 1-4, https://doi.org/10.1109/TASC.2016.2524502

- **SPARING, M ; BERGER, A ; WALL, F ; LUX, V ; HAMEISTER, S ; BERGER, D ; HOSSAIN, M ; ABDKADER, A ; FUCHS, G ; CHERIF, C.** Mathematische Modellierung des dynamischen Fadenlaufs in Abhängigkeit von der Spindeldrehzahl in einem Ringspinnprozess. *Textile Research Journal,* 2016, vol. 86 (11), 1180-1190, https://doi.org/10.1109/TASC.2016.2524641
- **HOSSAIN, M. ; TELKE, C ; ABDKADER, A ; CHERIF, C ; BEITELSCHMIDT M.** Messmethoden der dynamischen Fadenspannung in einem Ringspinnprozess. *Fibres & Textiles in Eastern Europe,* 2016, vol. 1 (115), 36-43, https://doi.org/10.1177/0040517515606355
- **HOSSAIN, M. ; ABDKADER, A ; NOCKE, A ; REIMAR, U ; KRZYWINSKI, F ; HASAN, MMB ; CHERIF, C.** Mathematische Modellierung des dynamischen Fadenverlaufs in Abhängigkeit von der Spindeldrehzahl in einem Ringspinnprozess auf Basis eines supraleitenden Magnetlagers. *Textile Research Journal,* 2017, vol. 87 (8), 1011-1022, https://doi.org/10.5604/12303666.1172098
- **HOSSAIN, M. ; TELKE, C ; SPARING, M ; ABDKADER, A ; NOCKE, A ; UNGER, R ; FUCHS, G ; BERGER, A ; CHERIF, C ; BEITELSCHMIDT, M.** Modellierung des Fadenlaufs am Ringspinnverfahren mit supraleitendem Hochleistungsdrallerteilungssystem. *Melliand Textilberichte,* 2017, vol. 1, 30-32, https://doi.org/10.1177/0040517515606355
- **HOSSAIN, M ; ABDKADER, A ; CHERIF, C.** Analysis of yarn properties in superconducting magnetic bearing based ring-spinning process. *Textile Research Journal,* 2018, vol. 88 (22), 2624-2638
- **HOSSAIN, M ; ABDKADER, A ; CHERIF, C.** Mathematische Modellierung des dynamischen Fadenverlaufs unter Berücksichtigung des Ballonsteuerungsrings und der Elastizität des Fadens im Ringspinnprozess auf der Basis des supraleitenden Lagerzwirnelements. *Fibres & Textiles in Eastern Europe,* 2018, vol. 26 (5), 32-40, https://doi.org/10.1177/0040517517725122

- **HOSSAIN, M ; TELKE, C ; ABDKADER, A ; SPAR-ING, M ; ESPENHAHN T. ; HÜHNE, R ; CHERIF, C ; BEITELSCHMIDT, M.** Theoretisches Modell des Fadenlaufs unter Berücksichtigung des Ballonsteuerungsrings und der Fadenelastizität in einer Ringspinnmaschine mit supraleitendem Magnetlager. *In: CD-Rom. 18th AUTEX World Textile Conference (Turkei), https://doi.org/10.5604/01.3001.0012.2528*
- **HOSSAIN, M. ; TELKE, C ; ABDKADER, A ; ESPE-NHAHN, T ; CHERIF, C ; BEITELSCHMIDT, M.** 300 prozentige Leistungssteigerung der Verspinnung von Chemiefasern auf der Turboringspinnmaschine mit reibungsfreiem supraleitenden Drallerteilungssystem. *In: Tagungsband. 58. Dornbirn Global Fiber Congress, Österreich,* 11. September 2019
- **HOSSAIN, M ; ABDKADER, A ; CHERIF, C. ; SPARING, M ; ESPENHAHN, T ; HÜHNE, R ; NIELSCH, K.** In situ measurement of dynamic yarn path in a turbo ring spinning process based on superconducting magnetic bearing twisting system. *Textile Research Journal,* 2019
- **HOSSAIN, M ; SPARING, M ; ESPENHAHN T ; AB-DKADER, A. ; CHERIF, C ; HÜHNE, R ; NIELSCH, K.** Influence of the magnet aspect ratio on the dynamic stiffness of a rotating superconducting magnetic bearing. *J. Phys. D,* 2019, https://doi.org/10.1177/0040517519879899
- **ESPENHAHN, T ; W UNDERWALD, F. ; MÖLLER, M. ; SPARING, M ; HOSSAIN, M ; FUCHS, G ; AB-DKADER, A ; CHERIF, C ; NIELSCH, K ; HÜHNE, R.** Neue Generation Turbo-Ringspinnmaschine bis zur Winkelspindeldrehzahl von 50.000 U/min. *In: ITMA INNOVATION LAB SPEAKERS PLATFORM, TMA 2019 (Barcelona),* 20. Juni 2019, https://doi.org/10.1088/1361-6463/ab4ed4